(19) **Europäisches Patentamt / European Patent Office / Office européen des brevets**

(11) **EP 3 591 095 B1**

(12) **EUROPEAN PATENT SPECIFICATION**

(45) Date of publication and mention
of the grant of the patent:
**11.08.2021 Bulletin 2021/32**

(21) Application number: **19185091.6**

(22) Date of filing: **15.02.2018**

(51) Int Cl.:
*C25B 11/032* (2021.01)　　*C25B 11/056* (2021.01)
*C25B 11/061* (2021.01)　　*H01M 4/02* (2006.01)
*H01M 4/04* (2006.01)　　*H01M 4/75* (2006.01)
*C25B 1/04* (2021.01)　　*C25B 9/23* (2021.01)
*C25B 11/097* (2021.01)　　*C25B 9/77* (2021.01)
*C25B 11/081* (2021.01)　　*C25B 9/73* (2021.01)

(54) **CATHODE, METHOD OF PRODUCING SAME, ELECTROLYZER USING SAME**

**KATHODE, VERFAHREN ZU IHRER HERSTELLUNG, ELEKTROLYSEUR MIT DIESER KATHODE**

**CATHODE, SON PROCÉDÉ DE PRODUCTION, ÉLECTROLYSEUR L'UTILISANT**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2017 JP 2017026346**

(43) Date of publication of application:
**08.01.2020 Bulletin 2020/02**

(62) Document number(s) of the earlier application(s) in accordance with Art. 76 EPC:
**18724437.1 / 3 388 553**

(73) Proprietor: **Asahi Kasei Kabushiki Kaisha
Tokyo (JP)**

(72) Inventors:
• **Nakajima, Yasuhiro
Tokyo, 101-8101 (JP)**
• **Hirano, Toshiyuki
Tokyo, 101-8101 (JP)**

• **Fujimoto, Norikazu
Tokyo, 101-8101 (JP)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
**JP-B2- H0 633 481　　US-A1- 2012 279 853
US-A1- 2015 203 976**

• **ALFREDO URSUA ET AL: "Hydrogen Production From Water Electrolysis: Current Status and Future Trends", PROCEEDINGS OF THE IEEE, IEEE. NEW YORK, US, vol. 100, no. 2, 20 January 2012 (2012-01-20), pages 410-426, XP011397944, ISSN: 0018-9219, DOI: 10.1109/JPROC.2011.2156750**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a cathode, a method for producing the same, and an electrolyzer using the same.

BACKGROUND

In recent years, techniques utilizing renewable energy, such as wind power generation and photovoltaic power generation, have attracted attention in order to address the issues including global warming due to greenhouse gases such as carbon dioxide, decrease of fossil fuel reserves, and so on.

The nature of renewable energy is that it is subject to very large fluctuation as its output depends on climatic conditions. It is thus not always possible to transport electric power obtained by electricity generation by renewable energy to the general electric power system, and there is concern about social influences such as imbalance of electricity supply and demand, destabilization of electric power system, and so on.

Therefore, research is being conducted to convert the electric power generated from renewable energy into a form suitable for storage and transportation for utilization. Specifically, study has been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years it can be used in many scenes such as in hydrogen stations for fuel cell vehicles (FCVs), smart communities, and hydrogen power plants. Accordingly, there is high expectation for the development of technology to obtain, in particular, hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis devices.

However, for adaptation of alkaline water electrolysis as a means for storing and transporting energy, it is necessary to make it possible to conduct water electrolysis efficiently and stably using electric power with large fluctuation in output as described above, and it is required to address various issues associated with electrolytic cells and devices for alkaline water electrolysis.

In order to address the issue of improving the electric power consumption rate for hydrogen production by suppressing the bath voltage in alkaline water electrolysis, it is known to be effective to use a structure in which the gap between the membrane and the electrodes is substantially eliminated, which is called a zero-gap structure, as the structure of the electrolytic cell (see JP5553605B [PTL 1] and WO2015098058A [PTL 2]). With the zero-gap structure, by rapidly escaping the generated gas through the pores of an electrode to the side opposite to the membrane side of the electrode, it is possible to reduce the distance between the electrodes while minimizing gas accumulation near the electrodes, thereby keeping bath voltage low. The zero-gap structure is very effective in suppressing bath voltage and is adopted in various electrolysis devices.

US 2012/279853 discloses a cathode suitable for water electrolysis comprising a conductive substrate and a catalyst layer, wherein the conductive substrate is made of a nickel mesh prepared by weaving nickel wires and the catalyst layer contains platinum and palladium. According to the disclosure of said document, the ratio between the moles of platinum and the metal ions in the catalyst layer is between 10 and 90 at% and the thickness of the catalyst layer is preferably between 0.5 $\mu$m and 3 $\mu$m. Additionally, said document discloses a method of producing the above described cathode.

JP H06-33481 discloses a cathode and a method of preparation thereof, wherein the cathode is suitable for water electrolysis showing low hydrogen overvoltage and comprising a nickel conductive substrate and a catalyst layer comprising platinum (between 1 $g/m^2$ and 20 $g/m^2$) and cerium (between 0.5 $g/m^2$ and 10 $g/m^2$). Additionally, said document discloses a method of producing the above described cathode.

Alfredo URSUA et al.: "Hydrogen Production From Water Electrolysis: Current Status and Future Trends", PROCEEDINGS OF THE IEEE, IEEE. NEW YORK, US, vol. 100, no. 2, 20 January 2012, pages 410-426, reviews water electrolysis technologies for hydrogen production and discloses general characteristics of electrolysis and recent improvements.

US 2015/203976 discloses a bipolar alkaline water electrolysis unit incorporated in an electrolytic cell for electrolyzing an electrolytic solution of alkaline water to obtain oxygen and hydrogen, the bipolar alkaline water electrolysis unit including an oxygen generating anode, a hydrogen generating cathode, a conductive partition wall that separates the anode and the cathode from each other, and an outer frame that surrounds the conductive partition wall, wherein a gas and electrolytic solution passage is provided at an upper portion of the conductive partition wall and/or the outer frame, and an electrolytic solution passage is provided at a lower part of the conductive partition wall and/or the outer frame.

CITATION LIST

Patent Literature

PTL 1: JP5553605B
PTL 2: WO2015098058A

SUMMARY

(Technical Problem)

However, in the conventional cathodes for alkaline water electrolysis described in PTLs 1 and 2, it is necessary to repeat the forward energization to proceed the intended electrolytic reaction and the reverse energization to cause reverse current to be generated after stopping the forward energization, resulting in the problems of wearing out or falling off of a catalyst layer and increased overvoltage. For this reason, it is difficult for a variable power source such as renewable energy to maintain high energy conversion efficiency over a long period.

It would thus be helpful to provide a cathode that maintains high energy conversion efficiency for a long period of time without increasing the overvoltage even when operating under a variable power source such as renewable energy.

(Solution to Problem)

Specifically, the invention relates to a cathode for alkaline water electrolysis as specified in independent claim 1; a method, as specified in claim 5, for producing the cathode; and an electrolyzer, as specified in claim 6, comprising the cathode.

(Advantageous Effect)

Having the above-described features, the cathode for water electrolysis according to the present disclosure can maintain high energy conversion efficiency for a long period of time without increasing the overvoltage even when operating under a variable power source such as renewable energy.

BRIEF DESCRIPTION OF THE DRAWINGS

In the accompanying drawings:

FIG. 1 is a side view generally illustrating an example of a bipolar electrolyzer including a bipolar electrolytic cell for alkaline water electrolysis according to an embodiment of the disclosure;
FIG. 2 is a cross-sectional view illustrating the inside of an electrolytic cell in a portion enclosed by broken line in FIG. 1 of a bipolar electrolyzer including a bipolar electrolytic cell for alkaline water electrolysis according to the present embodiment;
FIG. 3 illustrates the outline of an electrolysis device used in Examples and Comparative Examples; and
FIG. 4 illustrates the outline of a bipolar electrolyzer used in an electrolytic test.

DETAILED DESCRIPTION

The following provides a detailed description of the embodiment of this invention (hereinafter, referred to as the "present embodiment").

(Cathode for alkaline water electrolysis)

In hydrogen production by alkaline water electrolysis of the bipolar electrolyzer of the present embodiment, reduction of energy consumption, specifically, reduction of bath voltage presents a significant challenge. Since the electrolytic voltage greatly depends on the cathode, the performance of the cathode is important.

In addition to the voltage required for the electrolysis of water that is theoretically determined, the bath voltage for alkaline water electrolysis also includes an overvoltage of an anode reaction (generating oxygen), an overvoltage of a cathode reaction (generating hydrogen), and a voltage dependent on the distance between the anode and the cathode. As used herein, the term "overvoltage" refers to a voltage that needs to be applied excessively beyond the theoretical decomposition potential to cause a certain current flow, and its value depends on the current value. That is, by using equivalent electrodes with low overvoltage, hydrogen can be generated with lower power consumption.

To provide low overvoltage properties, the requirements for the cathode include high conductivity, high hydrogen generation ability, and high wettability of the electrolyte on the electrode surface. Since the cathode contains platinum (Pt), it is possible to satisfy these requirements for a long time even when the electrolyzer is operated under a variable power supply.

According to the invention, the cathode comprises a catalyst layer containing at least platinum on the surface of a conductive substrate.

In this case, by setting the weight per unit area of the catalyst layer to $6.0 \text{ g/m}^2$ or more, it is possible to reduce cracks penetrating the catalyst layer perpendicularly to the conductive substrate, to reduce the surface area of the conductive substrate in contact with the electrolyte, and to suppress falling off of the catalyst layer at the interface between the catalyst layer and the conductive substrate due to reverse energization.

In addition, setting the weight per unit area of the platinum to $5.5 \text{ g/m}^2$ or more is also effective in ensuring that platinum can be obtained in an amount sufficient for keeping overvoltage low even if the catalyst layer is worn out by reverse electricity. These effects remarkably improve the reverse electricity durability.

On the other hand, excessively increasing the weight of the catalyst layer leads to degradation in mechanical strength, causing the catalyst layer to easily fall off physically. Therefore, the weight per unit area of the catalyst layer must be $40.0 \text{ g/m}^2$ or less and that of the platinum must be $25.0 \text{ g/m}^2$ or less.

The weight per unit area of the catalyst layer is more preferably $8.0 \text{ g/m}^2$ or more and $40.0 \text{ g/m}^2$ or less, and further preferably $18.0 \text{ g/m}^2$ or more and $37.0 \text{ g/m}^2$ or less.

The weight per unit area of the platinum is more preferably $6.0 \text{ g/m}^2$ or more and $25.0 \text{ g/m}^2$ or less, and further preferably $10.0 \text{ g/m}^2$ or more and $23.0 \text{ g/m}^2$ or less.

The range of the weight per unit area of the catalyst layer and the weight per unit area of the platinum may be individually selected as appropriate for obtaining the effects of the present disclosure.

According to the invention, the cathode comprises a catalyst layer containing at least platinum on the surface of the conductive substrate.

In this case, by setting the average thickness of the catalyst layer to $0.30 \ \mu\text{m}$ or more, it is possible to reduce cracks penetrating the catalyst layer perpendicularly to the conductive substrate, to reduce the surface area of the conductive substrate in contact with the electrolyte, and to suppress falling off of the catalyst layer at the interface between the catalyst layer and the conductive substrate due to reverse energization.

In addition, setting the ratio of platinum atoms to metal atoms contained in the catalyst layer to 25 mol% or more and 100 mol% or less is also effective in ensuring that platinum can be obtained in a sufficient amount for keeping overvoltage low even if the catalyst layer is worn out due to reverse electricity. These effects remarkably improve the reverse electricity durability.

On the other hand, excessively increasing the thickness of the catalyst layer leads to degradation in mechanical strength, causing the catalyst layer to easily fall off physically. Therefore, the thickness of the catalyst layer must be $3.5 \ \mu\text{m}$ or less.

The average thickness of the catalyst layer is more preferably $0.4 \ \mu\text{m}$ or more and $3.5 \ \mu\text{m}$ or less, and still more preferably $0.7 \ \mu\text{m}$ or more and $2.6 \ \mu\text{m}$ or less.

The ratio of platinum atoms to metal atoms contained in the catalyst layer is more preferably 40 mol% or more and 100 mol% or less, and still more preferably 55 mol% or more and 100 mol% or less.

The range of the average thickness of the catalyst layer and the ratio of platinum atoms to metal atoms contained in the catalyst layer may be individually selected as appropriate for obtaining the effects of the present disclosure.

In addition, in the present embodiment, the material of the conductive substrate needs to contain nickel from the viewpoint of resistance to the operating environment.

The effect of improving the reverse electricity durability described above is expressed when the conductive substrate is in the form of a mesh having no corners or projections.

As described above, the conductive substrate is a mesh of metal wires containing at least one metal including nickel. Each of the metal wires containing at least one metal including nickel has no projections that would otherwise serve as the origin of interfacial detachment, that is, each metal wire is circular or elliptical in shape in a cross section perpendicular to the axial direction.

In the case where the conductive substrate has corners or projections as in an expanded metal, for example, such corners or projections would serve as the origin of interfacial detachment of the catalyst layer, in which case the above-described effects would be difficult to obtain.

Using a plain weave mesh for the conductive substrate, in order to achieve both an increase in gas generation amount due to increase in electrolytic surface area and efficient removal of gas generated by electrolysis from the electrode surface, the wire diameter is 0.05 mm or more and 1.0 mm or less, and the aperture size is from 0 mm or more to 1.220 mm or less (the pitch is from 20 to 60 mesh). Preferably, the wire diameter is 0.1 mm or more and 0.3 mm or less, and the aperture size is from 0.208 mm or more to 0.747 mm or less (the pitch is 30 mesh or more and 50 mesh or less).

It is also noted here that the cathode for alkaline water electrolysis having low overvoltage properties is less susceptible, even in the case of using an unstable current source such as renewable energy, to corrosion of the substrate and the catalyst layer, detachment of the catalyst layer, dissolution into the electrolyte, and adhesion of inclusions to the membrane.

The cathode for alkaline water electrolysis of the present embodiment is preferably a porous body from the perspectives of using a larger surface area for electrolysis and removing the gas generated by electrolysis efficiently from the electrode surface. In particular, in the case of a zero-gap electrolyzer, it is necessary to remove the gas evolved from the back side of a surface of the cathode in contact with the membrane, and it is preferable that the surface of the cathode in contact with the membrane and the opposite surface penetrate each other.

The cathode comprises apertures, and the aperture ratio is preferably 40 % or more and 70 % or less. When the aperture ratio is reduced, the area density of the cathode increases and the cathode heat generation coefficient Hc can be reduced. On the other hand, however, the gas generated in the cathode is less easily removed from the cathode surface and the gas stays in the vicinity of the cathode and the membrane, leading to a decrease in effective electrolysis area. By setting the aperture ratio within the above range, it is possible to efficiently remove the gas generated by electrolysis from the surface of the cathode while suppressing an increase in the cathode heat generation coefficient Hc. The aperture ratio of the cathode is more preferably 50 % or more and 60 % or less.

The aperture ratio of the electrode can be measured with the method described in the Examples below.

Preferably, the surface of the cathode is coated with a layer containing platinum (Pt) and at least one platinum group element selected from the group consisting of ruthenium (Ru), rhodium (Rh), palladium (Pd), osmium (Os), and iridium (Ir). This makes it possible to further lower the overvoltage of the cathode. As the platinum group element contained in the layer on the surface of the cathode, Pd and Ir are more preferable.

Preferably, the platinum group element is partially or entirely an oxide.

The weight per unit weight of the platinum group element is more preferably 2.0 $g/m^2$ or more and 15.0 $g/m^2$ or less, and further preferably 3.0 $g/m^2$ or more and 15.0 $g/m^2$ or less.

Examples of the method of forming the catalyst layer on the substrate include: a thermal spraying method such as plating or plasma spraying; a thermal decomposition method including applying heat to a precursor layer solution applied onto a substrate; a method including mixing a catalyst substance with a binder component and immobilizing it on a substrate; and a vacuum film-forming method such as a sputtering method.

With a thermal decomposition method, it is possible to form a thin layer having a uniform thickness on a porous substrate. It is thus possible to coat the surface of the substrate with a small amount of raw material in an efficient way.

When a thermal decomposition method is used, the method preferably comprises: forming a precursor layer on a surface of the substrate; and performing sintering such that a catalyst layer is formed by heating the substrate with the precursor layer formed on the surface thereof and decomposing the precursor layer.

The forming of the precursor layer includes, for example, applying and drying a liquid containing a metal element on the surface of the substrate. In addition to Pt, examples of the metal element include at least one platinum group element selected from the group consisting of Ru, Rh, Pd, Os, and Ir. The metal in the coating liquid is not limited to a particular form, and may be in the form of fine particles of a metal or a metal compound, or may be dissolved and ionized. In the form of fine particles, the metal is preferably dispersed in the liquid in order to form a homogeneous precursor layer. Accordingly, the particle size is preferably 100 nm or less. When it is ionized, examples of the metal salt include: halide salts such as fluoride, chloride, bromide, and iodide; inorganic compound salts such as nitrate, sulfate, and phosphate; and organic compound salts represented by acetate. Among these preferred are chlorides and nitrates since the raw materials are industrially available. In addition, nitrate is more preferable because anion components remaining after decomposition of nitrate less deteriorates the substrate, making it possible to provide an electrode with good storage stability.

The solvent of the solution may be any solvent as long as it can dissolve a solute such as a metal salt. Since the ability to prepare a high concentration solution contributes to increasing the coating amount and improving the productivity, it is preferable that the solvent contains water or at least one of alcohols having 2 to 5 carbon atoms. When the concentration of the metal salt of the solution is low, much energy is required for volatilization of the solvent. On the other hand, a high concentration of the metal salt may introduce non-uniformity, causing unevenness in the thickness of the catalyst layer. Therefore, the concentration of the metal salt of the coating liquid used in the forming of the precursor is preferably 0.001 mol/L or more and 1 mol/L or less, and more preferably 0.01 mol/L or more and 0.5 mol/L.

In the forming of the precursor layer, the liquid containing a metal element may be applied to the surface of the substrate with various known methods. Examples of such methods include: a dipping method that includes dipping a substrate in a liquid; a method that includes applying a liquid to a substrate with a brush; a roll method that includes applying a liquid impregnated in a sponge-like roll to a substrate; and an electrostatic coating method that includes applying, by spraying or the like, a coating liquid to a substrate with the coating liquid and the substrate charged to opposite polarities. In particular, from the perspectives of productivity and uniform coating in the catalyst layer, a roll method and an electrostatic coating method are suitably used.

Prior to application of the solution, surface treatment may be carried out to provide irregularities on the surface of the substrate. By providing irregularities on the surface of the substrate, adhesion between the substrate and the catalyst layer is improved. The surface treatment is not limited to a particular method. For example, blasting or etching with a chemical solution may be used.

The temperature at which the catalyst layer is formed in the sintering is not particularly limited as long as it is not lower than the thermal decomposition temperature of the metal salt used, yet is preferably 300 °C or higher. The reason is that the thermal decomposition of many metal salts proceeds at 300 °C or higher. The temperature is preferably 400 °C or higher, and more preferably 500 °C or higher, in order to allow thermal decomposition to proceed satisfactorily and to remove unreacted substances. When sintering is performed at a temperature above 1000 °C, the substrate softens and may deform. The temperature is thus preferably 1000 °C or lower, more preferably 800 °C or lower, and still more preferably 600 °C or lower.

The forming of the precursor layer and the sintering are preferably repeated more than once. In order to form a catalyst layer having a desired thickness, it is possible to adjust only the amount of coating liquid per coating cycle or the concentration of the metal salt in the liquid, yet if the amount of liquid applied per coating cycle or the metal concentration in the liquid is excessively increased, non-uniformity may be introduced such that each layer may not be uniformly formed. Therefore, by repeating the forming of the precursor layer and the sintering more than once, it is possible to form a more uniform catalyst layer with a desired thickness. The number of repetitions is not particularly limited as long as a desired thickness can be obtained, yet it is preferably 5 or more and 30 or less.

After repeating the forming of the precursor layer and the sintering more than once, the method may further comprise performing additional sintering at a temperature at or above the temperature for the preceding sintering. At this time, the upper limit of the additional sintering temperature is preferably 1000 °C, and more preferably 800 °C.

The cathode for alkaline water electrolysis according to the present embodiment has a specific surface area of preferably 0.001 $m^2$/g or more and 1 $m^2$/g or less, and more preferably 0.005 $m^2$/g or more and 0.1 $m^2$/g or less. If the specific surface area of the cathode (the specific surface area of the whole electrode including the substrate) is small, the reactive active sites per unit area are reduced and low overvoltage properties may not be obtained. On the other hand, if the specific surface area of the cathode for alkaline water electrolysis is excessively large, the mechanical strength of the catalyst layer decreases and the durability may decrease.

The specific surface area can be measured by, for example, the BET method. A measurement sample is placed in a dedicated cell and subjected to pretreatment through vacuum evacuation by heating to remove adsorbates on pore surfaces in advance. Then, the adsorption/desorption isotherm of gas adsorption to the measurement sample is measured at -196 °C. The specific surface area of the measurement sample can be obtained from analysis of the obtained adsorption/desorption isotherm by the BET method.

The area used for electrolysis on the surface of the cathode can be obtained in a pseudo manner by measuring the capacity of the electric double layer formed at the interface between the cathode and the electrolyte.

The double layer capacity can be measured by, for example, an electrochemical impedance method. The double layer capacity is calculated by analyzing the Cole-Cole plot obtained by plotting real and imaginary components from AC impedance measurement using equivalent circuit fitting.

The coating resistance of the cathode for alkaline water electrolysis according to the present embodiment is preferably 2 $\Omega \cdot cm^2$ or less, and more preferably 0.5 $\Omega \cdot cm^2$ or less. If the coating resistance of the cathode is excessively high, this leads to an increase in overvoltage when electrolysis is performed under conditions of high current density in order to obtain high energy efficiency.

The coating resistance can be measured by, for example, an electrochemical impedance method. The coating resistance is calculated by analyzing the Cole-Cole plot obtained by plotting real and imaginary components from AC impedance measurement using equivalent circuit fitting.

In the present embodiment, the characteristics of the cathode described above may be used alone or in combination.

(Electrolyzer for alkaline water electrolysis)

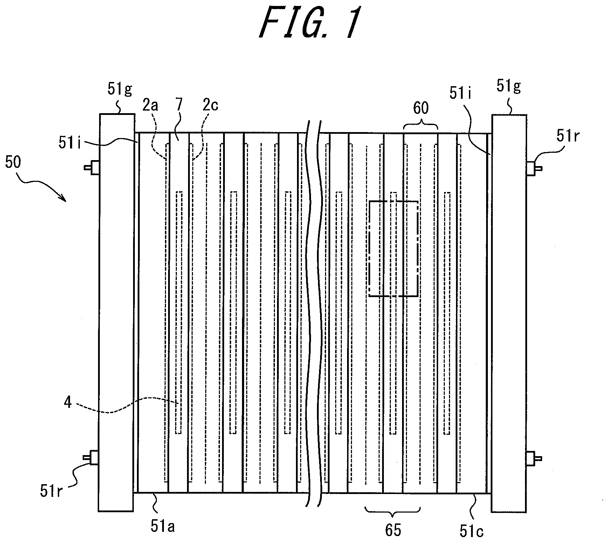

FIG. 1 is a side view generally illustrating an example of a bipolar electrolyzer including a bipolar electrolytic cell for alkaline water electrolysis according to the present embodiment.

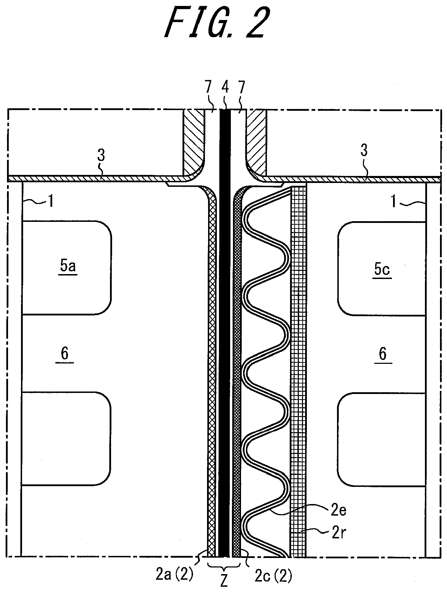

FIG. 2 illustrates a zero-gap structure (a cross-sectional view of a portion enclosed by broken line in FIG. 1) of an example of a bipolar electrolyzer including a bipolar electrolytic cell for alkaline water electrolysis according to the present embodiment.

As illustrated in FIGS. 1 and 2, a bipolar electrolyzer 50 according to the present embodiment preferably comprises: an anode 2a; a cathode 2c; a partition wall 1 separating the anode 2a from the cathode 2c; and an outer frame 3 bordering the partition wall 1 in which a plurality of elements 60 are overlapped one another with a membrane 4 interposed therebetween.

Further, in the bipolar electrolyzer 50 of the present embodiment, the membrane 4 is in contact with the anode 2a and the cathode 2c to form a zero-gap structure Z (see FIG. 2).

The bipolar electrolyzer of the present embodiment may be a monopolar type or a bipolar type, and may be a bipolar electrolyzer for alkaline water electrolysis in which bipolar elements are stacked on top of one another via the corresponding membranes.

The monopolar method is a method of directly connecting each of one or more elements to a power supply, while the bipolar method is a method of arranging a large number of bipolar elements in series and connecting elements at both ends to a power supply.

In the present embodiment, as illustrated in FIG. 1, the bipolar type electrolyzer 50 is constructed by stacking the required number of bipolar elements 60.

In the example of the bipolar electrolyzer 50 illustrated in FIG. 1, a fast head 51g, an insulating plate 51i, and an anode terminal element 51a are arranged in order from one end, and an anode-side gasket portion, a membrane 4, a cathode side gasket portion, and a bipolar element 60 are arranged side by side in this order. In this case, each bipolar element 60 is arranged such that the corresponding cathode 2c faces toward the anode terminal element 51a side. Components from anode-side gasket portions up to bipolar elements 60 are repeatedly arranged as many times as required for the designed production quantity. After the required number of components from anode gaskets up to bipolar elements 60 are repeatedly arranged, an anode-side gasket portion, a membrane 4, and a cathode-side gasket portion are arranged again, and finally a cathode terminal element 51c, an insulating plate 51i, and a loose head 51g are arranged in this order. All of these components are tightened together with a tie rod 51r to provide a bipolar electrolyzer 50.

The arrangement of the bipolar electrolyzer 50 can be arbitrarily selected from either the anode side or the cathode side and is not limited to the above order.

As illustrated in FIG. 1, in the bipolar electrolyzer 50, the bipolar elements 60 are arranged between the anode terminal element 51a and the cathode terminal element 51c, and the membranes 4 are arranged between the anode terminal element 51a and a bipolar element 60, between bipolar elements 60 arranged adjacent to each other, and between a bipolar element 60 and the cathode terminal element 51c, respectively.

In the bipolar electrolyzer 50 of the present embodiment, as illustrated in FIG. 2, the membrane 4 is in contact with the anode 2a and the cathode 2c so as to form a zero-gap structure Z.

In particular, in the bipolar electrolyzer 50 according to the present embodiment, a portion between the partition walls 1 of two adjacent bipolar elements 60 and a portion between the partition walls 1 of each terminal element and of the adjacent bipolar element 60 are respectively referred to as an electrolytic cell 65. Each electrolytic cell 65 includes: a partition wall 1, an anode compartment 5a, and an anode 2a of one element; a membrane 4; and a cathode 2c, a cathode compartment 5c, and a partition wall 1 of the other element.

In alkaline water electrolysis, when there is a gap between the membrane 4 and the anode 2a respective the cathode 2c, a large amount of bubbles generated by electrolysis is accumulated in this portion along with the electrolyte, leading to a significant increase in electric resistance. In order to greatly reduce the bath voltage in each electrolysis cell 65, it is effective to minimize the distance between the anode 2a and the cathode 2c (hereinafter also referred to as the "inter-electrode distance") to eliminate the influence of the electrolyte and bubbles present between the anode 2a and the cathode 2c.

Therefore, zero-gap structure is adopted. The zero-gap structure can maintain a state in which the anode 2a and the membrane 4 are in contact with each other, and so are the cathode 2c and the membrane 4, over the entire surfaces of the electrodes, or a state in which the distance between the electrodes is substantially the same as the thickness of the membrane 4 such that there is almost no gap between the anode 2a and the membrane 4 and between the cathode 2c and the membrane 4.

In the bipolar electrolyzer 50 according to the present embodiment, as illustrated in FIG. 2, the partition walls 1, the outer frames 3, and the membrane 4 define electrode compartments 5 through which the electrolyte passes.

A header pipe for distributing or collecting an electrolyte that is attached to the bipolar electrolyzer 50 illustrated in FIGS. 1 and 2 is typically disposed as an internal header or an external header. In the present disclosure, however, no limitation is placed on the type of header pipe and either type may be used.

The following provides a description of details of the components of the bipolar electrolytic cell for alkaline water electrolysis and of the bipolar electrolyzer according to the present embodiment.

In the following, preferred embodiments for enhancing the effect of the present disclosure are also described in detail.

- Partition wall -

Each partition wall 1 is preferably provided between a cathode 2c and an anode 2a, and between an anode 2a and a cathode current collector 2r, and/or between a cathode 2c and an anode current collector 2r.

In the present embodiment, the shape of each partition wall may be a plate-like shape having a predetermined thickness, yet is not particularly limited.

The shape of each partition wall in a plan view is not particularly limited, and it may be a rectangular shape (such as a square or a rectangle) or a circular shape (such as a circle or an ellipse), where a rectangular shape may have a rounded corner.

The size of each partition wall is not particularly limited, and may be appropriately designed according to the size of the electrode compartment.

From the viewpoint of achieving uniform supply of electric power, each partition wall is preferably made of a material having high conductivity, and from the perspectives of alkali resistance and heat resistance, preferred materials include nickel, nickel alloy, mild steel, and nickel alloy plated with nickel.

- Electrode -

The size of each electrode is not particularly limited and may be determined according to the size of the electrode compartment; it may be 0.4 m to 4.0 m in length, 0.4 m to 6.0 m in width, and 0.1 mm to 3 mm in thickness.

As an electrode in the bipolar electrolytic cell for alkaline water electrolysis according to the present embodiment, in order to increase the surface area used for electrolysis and to efficiently remove gas generated by electrolysis from the electrode surface, it is preferable that at least one of the anode or the cathode is a porous body, and it is more preferable that both of the anode and the cathode are porous bodies. In particular, in the case of a zero-gap electrolyzer, it is necessary to remove the gas evolved from the back side of a surface of an electrode in contact with the membrane, it is preferable that the surface of the electrode in contact with the membrane and the opposite surface penetrate each other.

Preferably, the anode includes a porous metal body. The catalyst layer carried on the electrode becomes a porous body and the electrolytic effective area is increased, making it possible to lower the voltage.

Examples of the porous body include meshes such as plain weave and twill weave, punching metal, expanded metal, metal foam, and the like.

In the case of using a punching metal, the size is not particularly limited, yet in order to achieve both an increase in gas generation amount due to increase in electrolytic surface area and efficient removal of gas generated by electrolysis from the electrode surface, and from the viewpoint of mechanical strength, it is preferable that the hole diameter is 2 mm or more and 8 mm or less, the pitch is 2 mm or more and 10 mm or less, the aperture ratio is 20 % or more and 80 % or less, and the thickness is 0.5 mm or more and 2 mm or less.

In the case of using an expanded metal, the size is not particularly limited, yet in order to achieve both an increase in gas generation amount due to an increase in electrolytic surface area and efficient removal of gas generated by electrolysis from the electrode surface, and from the viewpoint of mechanical strength, it is preferable that the short way of mesh (SW) is 2 mm or more and 5 mm or less, the long way of mesh (LW) is 3 mm or more and 10 mm or less, the thickness is 0.5 mm or more and 2 mm or less, and the aperture ratio is 20 % or more and 80 % or less.

In the case of using a metal foam, the size is not particularly limited, yet in order to achieve both an increase in gas generation amount due to increase in electrolytic surface area and efficient removal of gas generated by electrolysis from the electrode surface, and from the viewpoint of mechanical strength, it is preferable that the porosity is 80 % or more and 95 % or less and the thickness is 0.5 mm or more and 2.0 mm or less.

The material of the substrate is not particularly limited, yet mild steel, stainless steel, nickel, and a nickel-based alloy are preferable because of the resistance to the operating environment.

Each anode has apertures, and in order to efficiently remove the gas generated by electrolysis from the surface of the anode, the aperture ratio is preferably 30 % or more and 70 % or less.

The catalyst layer of each anode preferably has high oxygen-generating ability, and it is possible to use, for example, nickel, cobalt, iron, or a platinum group element. In order to realize desired activity and durability, the catalyst layer can be formed as a simple substance of a metal, a compound such as an oxide, a complex oxide or alloy composed of a plurality of metal elements, or a mixture thereof. Specific examples include nickel plating, alloy plating of nickel and cobalt, nickel and iron, and the like, complex oxides including nickel and cobalt such as $LaNiO_3$, $LaCoO_3$, and $NiCo_2O_4$, compounds of platinum group elements such as iridium oxide, carbon materials such as graphene, and the like. Organic substances such as polymers may be contained in order to improve durability and adhesion to the substrate.

- Outer frame -

Although the shape of each outer frame 3 in the bipolar electrolytic cell for alkaline water electrolysis according to the present embodiment is not particularly limited as long as it can border the corresponding partition walls 1, each outer frame 3 may have an inner surface extending over the periphery of each partition wall 1 along the direction perpendicular to the plane of each partition wall 1.

The shape of each outer frame is not particularly limited, and may be appropriately determined according to the shape of the partition walls in plan view.

The size of each outer frame is not particularly limited, and it may be designed according to the external dimensions of the electrode compartment.

As a material of each outer frame, a material having conductivity is preferable, and from the perspectives of alkali resistance and heat resistance, the following materials are preferred: nickel, nickel alloy, mild steel, and nickel alloy plated with nickel.

- Membrane -

As the membrane 4 used in each bipolar electrolytic cell for alkaline water electrolysis 65 according to the present embodiment, an ion permeable membrane is used in order to isolate the generated hydrogen gas and oxygen gas while conducting ions. For this ion permeable membrane, it is possible to use an ion exchange membrane having ion exchange ability and a porous membrane capable of permeating the electrolyte. The ion permeable membrane preferably has low gas permeability, high ionic conductivity, low electronic conductivity, and high strength.

- Porous membrane -

A porous membrane has a plurality of fine through-holes, and has a structure that permits the electrolyte to pass through the membrane. Control of the porous structure such as pore size, porosity, and hydrophilicity is very important since the electrolyte permeates into the porous membrane to develop ion conduction. On the other hand, the porous membrane is required to prevent not only the electrolyte but also the generated gas from passing therethrough, that is, to have gas barrier properties. From this viewpoint control of the porous structure is also important.

The porous membrane has a plurality of fine through-holes, and may be, for example, a polymeric porous membrane, an inorganic porous membrane, a woven fabric, or a nonwoven fabric. These may be prepared with known techniques.

- Ion exchange membrane -

As the ion exchange membrane, there are a cation exchange membrane that selectively permeates cations and an anion exchange membrane that selectively permeates anions, and either one may be used.

The material of the ion exchange membrane is not particularly limited, and any known materials can be used. For example, a fluorine-containing resin or a modified resin of a polystyrene/divinylbenzene copolymer can be suitably used. In particular, a fluorine-containing ion exchange membrane is particularly preferable because it is excellent in, for example, heat resistance and chemical resistance.

((Zero gap structure))

In each zero-gap electrolytic cell 65, as a means for reducing the distance between the electrodes, it is preferable to dispose a spring, which is an elastic body 2e, between an electrode 2 and the corresponding partition wall 1 to support the electrode with the spring. For instance, in a first example, a spring made of a conductive material is attached to the partition wall 1, and the electrode 2 may be attached to the spring. In a second example, a spring is attached to an electrode rib 6 attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode against the membrane.

Further, by strengthening the rigidity of the other electrode paired with the electrode supported via the elastic body (for example, by making the rigidity of the anode stronger than the rigidity of the cathode), the other electrode is structured to have less deformation even when pressed. On the other hand, the electrode supported via the elastic body has a flexible structure capable of deforming when pressed upon the membrane such that irregularities due to fabrication accuracy of the electrolyzer, deformation of the electrode, and the like can be absorbed, and a zero-gap structure can be maintained.

The above-described zero-gap structure Z includes those formed between the anode terminal element 51a and an element, between elements, and between an element and the cathode terminal element 51c.

In each bipolar electrolytic cell for alkaline water electrolysis 65 according to the present embodiment, as illustrated in FIG. 2, it is preferable that a conductive elastic body 2e and a cathode current collector 2r are interposed between the cathode 2c and the partition 1 such that the conductive elastic body 2e is sandwiched between the cathode 2c and the cathode current collector 2r. Further, it is preferable that the cathode current collector 2r is in contact with the rib 6 of the cathode.

As illustrated in FIG. 2, the zero-gap structure Z of each bipolar electrolytic cell 65 for alkaline water electrolysis according to the present embodiment is preferably configured such that: one bipolar element 60 in which an anode rib 6 and an anode 2a are stacked in the stated order on the anode 2a side of the partition wall 1 and another bipolar element 60 in which a cathode rib 6, a cathode current collector 2r, a conductive elastic body 2e, and a cathode 2c are stacked in the stated order on the cathode 2c side are stacked with a membrane 4 interposed therebetween; and the membrane 4 is in contact with the anode 2a and the cathode 2c.

- Current collector -

Examples of the current collector include a cathode current collector and an anode current collector.

The current collector transmits electricity to the conductive elastic body and the electrode stacked thereon, supports the loads received from them, and has a roll of allowing the gas generated from the electrodes to pass through to the partition wall successfully. The current collector is thus preferably formed as an expanded metal, a punched porous plate, or the like. In this case, the aperture ratio of the current collector is preferably within a range allowing the hydrogen gas generated from the electrode to be extracted to the partition wall side without any problems. However, if the aperture ratio is too high, the strength or the conductivity to the conductive elastic body may be lowered. If it is too small, gas escape may be deteriorated.

Nickel, nickel alloy, stainless steel, mild steel, and the like can be used as the material of the current collector from conductivity and alkali resistance perspectives, yet from the viewpoint of corrosion resistance, nickel, mild steel, stainless steel, and nickel alloy plated with nickel are preferred.

- Conductive elastic body -

It is essential that the conductive elastic body is provided between the current collector and the electrode and is in contact with the current collector and the electrode, and that the conductive elastic body allows the electricity to be transmitted to the electrode and does not hinder the diffusion of the gas generated from the electrode. This is because if the diffusion of gas is hindered, the electrical resistance increases and the area of the electrode used for electrolysis decreases, resulting in lower electrolysis efficiency. The most important role is to bring the membrane and the electrode into close contact with each other by evenly applying an appropriate pressure to the electrode so as not to damage the membrane.

- Electrode compartment -

In the bipolar electrolyzer 50 according to the present embodiment, as illustrated in FIG. 2, the partition walls 1, the outer frames 3, and the membrane 4 define electrode compartments 5 through which the electrolyte passes. In this case, across the partition wall 1, one electrode compartment 5 on the anode side is an anode compartment 5a, and the other on the cathode side is a cathode compartment 5c.

-Rib-

In each bipolar electrolytic cell for alkaline water electrolysis 65 according to the present embodiment, it is preferable that each rib 6 is physically connected to the corresponding electrode 2. With this configuration, each rib 6 serves as a support for the corresponding electrode 2, making it easier to maintain the zero-gap structure Z. It is also preferable that each rib 6 is electrically connected to the corresponding partition wall 1.

The above example of the bipolar electrolytic cell for alkaline water electrolysis adopts a structure such that the cathode rib, the cathode current collector, the conductive elastic body, and the cathode are stacked in the stated order in the cathode compartment, and the anode rib and the anode are stacked in the stated order in the anode compartment. The present disclosure is not so limited, however, and a structure of "anode rib/anode current collector/conductive elastic body/anode" may be used in the anode compartment.

Preferably, the ribs (anode and cathode ribs) have not only the role of supporting the anode or the cathode, but also the role of transmitting the current from the partition wall to the anode or cathode.

Generally, a conductive metal is used as the material of the ribs. For example, nickel-plated mild steel, stainless steel, or nickel may be used. It is particularly preferable that the material of the ribs is the same as that of the partition walls. A most preferred material of the ribs is nickel.

- Gasket -

In each bipolar electrolytic cell for alkaline water electrolysis 65 according to the present embodiment, as illustrated in FIG. 2, it is preferable that a gasket 7 is sandwiched between the outer frames 3 bordering the partition walls 1 together with the membrane 4.

The gasket 7 is used for providing a seal against the electrolyte and generated gas between the bipolar element 60 and the membrane 4 and between the bipolar elements 60, and to prevent leakage of the electrolyte and generated gas to the outside of the electrolyzer and gas mixture between the bipolar compartments.

The gasket is generally configured with a quadrangular or annular shape obtained by hollowing out the electrode surface in conformity with the surface of the element (such as a bipolar element, an anode terminal element, or a cathode terminal element) contacting the frame body. A membrane can be stacked between elements by sandwiching the membrane with two such gaskets. Furthermore, it is also preferable that the gasket comprises a slit portion capable of accommodating the membrane so as to be able to hold the membrane, and the gasket is provided with an opening which allows the accommodated membrane to be exposed on both surfaces of the gasket. In this way, the gasket can accommodate the edge portion of the membrane in the slit portion and cover the end face of the edge portion of the membrane. This configuration can more reliably prevent leakage of the electrolyte or gas from the end face of the membrane.

The material of the gasket is not particularly limited, and a known rubber material, resin material, or the like having insulation properties may be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluoro resin materials such as polytetrafluoroethylene (PTFE), tetrafluoroethylene/perfluoroalkyl vinyl ether copolymer (PFA), tetrafluoroethylene-ethylene copolymer (ETFE), chlorotrifluoroethylene-ethylene copolymer (ECTFE); and resin materials such as polyphenylene sulfide (PPS), polyethylene, polyimide, and polyacetal. Of these, ethylene-propylene-diene rubber (EPDM) and fluororubber (FR) are particularly preferable from the viewpoint of elastic modulus and alkali resistance.

- Header -

The electrolyzer for alkaline water electrolysis preferably comprises a cathode compartment and an anode compartment for each electrolytic cell. In order to conduct the electrolysis reaction continuously in the electrolyzer, it is necessary to continuously supply an electrolyte that contains sufficient amounts of the raw materials to be consumed by electrolysis into the cathode compartment and the anode compartment of each electrolysis cell.

The electrolytic cell is connected to an electrolyte supply/discharge plumbing system, called a header, shared by a plurality of electrolytic cells. In general, the anode distribution pipe is called an anode inlet header, the cathode distribution pipe is a cathode inlet header, the anode collection pipe is an anode outlet header, and the cathode collection pipe is called a cathode outlet header. Each element is connected to the corresponding electrolyte distribution pipe and the corresponding electrolyte collection pipe through a hose or the like.

Although the material of the header is not particularly limited, it is necessary to adopt those which can withstand corrosive properties of the electrolyte to be used, operating conditions such as pressure and temperature, and so on. The material of the header may be iron, nickel, cobalt, PTFE, ETFE, PFA, polyvinyl chloride, or polyethylene.

- Internal header -

Internal header type refers to a type in which a bipolar electrolyzer and a header (a pipe for distributing or collecting an electrolyte) are integrated.

An example of internal header type has an anode inlet header and a cathode inlet header that are provided in a part of a lower portion of the outer frame at the edge of a partition wall, and similarly, an anode outlet header and a cathode outlet header in a part of an upper portion of the outer frame at the edge of the partition wall. The outer frame and the anode compartment or the cathode compartment are connected to each other at an electrolyte inlet or an electrolyte outlet through which the electrolyte passes.

- External header -

The external header type refers to a type in which a bipolar electrolyzer and a header (a pipe through which an electrolyte is distributed or collected) are independent.

A bipolar electrolyzer of external header type is independently provided in such a manner that an anode inlet header and a cathode inlet header run in parallel to the electrolyzer in a direction perpendicular to the current-carrying surface of the electrolyzer. The anode inlet header and the cathode inlet header are connected to respective elements by a hose.

It is noted that the bipolar electrolyzer of inner header type or outer header type may contain a gas-liquid separation box for separating the gas generated by electrolysis from the electrolyte. The attachment position of the gas-liquid separation box is not particularly limited, yet it may be installed between the anode compartment and the anode outlet header, or between the cathode compartment and the cathode outlet header.

((Electrolyte))

In the bipolar electrolyzer of the present embodiment, a cathode compartment frame to which a cathode is attached and an anode compartment frame to which an anode is attached are arranged via a partition wall. That is, the anode compartment and the cathode compartment are partitioned by a partition wall. The electrolyte is supplied to the anode compartment and the cathode compartment.

As the electrolyte, those commonly used for water electrolysis can be used. Examples thereof include a potassium hydroxide aqueous solution and a sodium hydroxide aqueous solution. Further, the concentration of the electrolyte is preferably 1 N or more and 12 N or less, and more preferably 6 N or more and 10 N or less.

((Alkaline water electrolysis method))

Next, a method for producing hydrogen by alkaline water electrolysis using the bipolar electrolyzer according to the present embodiment will be described.

According to the present disclosure,
a current is applied to the bipolar electrolyzer which has the anode and the cathode as described above and in which an electrolyte is circulated, to produce hydrogen at the cathode. At this time, for example, a variable power supply can be used as the power supply. A variable power supply is a power supply whose output fluctuates in increments of several seconds to several minutes derived from a renewable energy power station, unlike a power supply with stable output, such as grid power. The method of renewable energy generation is not particularly limited, yet for example, it may be solar power generation or wind power generation.

For example, in the case of electrolysis using a bipolar electrolyzer, a cationic electrolyte in the electrolyte moves from the anode compartment of an element through the membrane to the cathode compartment of the adjacent element, and an anionic electrolyte moves from the cathode compartment of an element through the membrane to the anode compartment of the adjacent element. In this way, the current during electrolysis will flow along the direction in which the elements are connected in series. That is, the current flows from the anode compartment of one element to the cathode compartment of the adjacent element via the membrane. Through the electrolysis, oxygen gas is generated in the anode compartment, and hydrogen gas in the cathode compartment.

The bipolar electrolytic cell 65 for alkaline water electrolysis according to the present embodiment can be used for the bipolar electrolyzer 50, the electrolysis device for alkaline water electrolysis 70, and the like. Examples of the electrolysis device for alkaline water electrolysis 70 include a device comprising the bipolar electrolyzer 50 of the present embodiment, a tubing pump 71 to circulate the electrolyte, a gas-liquid separation tank 72 to separate the electrolyte from hydrogen and/or from oxygen, and a water replenisher to replenish water consumed by electrolysis.

The electrolysis device for alkaline water electrolysis may further comprise other components such as a rectifier 74, an oxygen concentration meter 75, a hydrogen concentration meter 76, a flow meter 77, a pressure gauge 78, a heat exchanger 79, and a pressure control valve 80.

In the alkaline water electrolysis method using the electrolysis device for alkaline water electrolysis described above, the current density applied to the electrolysis cell is preferably from 4 kA/m$^2$ to 20 kA/m$^2$, and more preferably 6 kA/m$^2$ to 15 kA/m$^2$.

In particular, when a variable power supply is used, it is preferable to set the upper limit of the current density within the above range.

(Hydrogen production method)

The hydrogen production method according to the present disclosure includes performing electrolysis of water containing alkali with an electrolyzer to produce hydrogen, and may be carried out using the cathode, the electrolyzer, and the water electrolysis method according to the present embodiment.

The electrolyzer may comprise at least an anode and a cathode.

In the cathode, the conductive substrate may be a mesh of metal wires containing at least one metal including nickel, the catalyst layer may have a weight per unit area of 6.0 $g/m^2$ or more and 40.0 $g/m^2$ or less, and platinum may have a weight per unit area of 5.5 $g/m^2$ or more and 25.0 $g/m^2$ or less, or alternatively in the cathode, the conductive substrate may be a mesh of metal wires containing at least one metal including nickel, the catalyst layer may have an average thickness of 0.30 $\mu$m or more and 3.5 $\mu$m or less, and a ratio of platinum atoms to metal atoms contained in the catalyst layer may be 25 mol% or more and 100 mol% or less.

Details of the cathode, the electrolyzer, and the water electrolysis method according to the present embodiment are as described above.

The cathode for alkaline water electrolysis, the method for producing the cathode for alkaline water electrolysis according to the embodiment of the present disclosure, the bipolar electrolyzer for alkaline water electrolysis according to the present embodiment, and the hydrogen production method according to the present disclosure have been described above with reference to the accompanying drawings.

EXAMPLES

(Example 1)

Used as the conductive substrate was a plain weave mesh substrate having a circular cross section and obtained by knitting fine wires of nickel having a diameter of 100 mm with an aperture size of 0.485 mm (a mesh count of 40 mesh). The conductive substrate blasted with alumina powder having a weight-average particle diameter of 100 $\mu$m or less was cut into 8.5 cm $\times$ 17.0 cm, then acid treated in 6 N hydrochloric acid at room temperature for 10 minutes, washed with water, and dried.

The dried conductive substrate was heated and sintered at 500 °C for 10 minutes using a muffle furnace to form a nickel oxide layer on the surface of the conductive substrate. Using an electronic balance PG 503-S from Mettler Toledo Corporation, the weight of the conductive substrate after heating and sintering was measured.

Next, a palladium nitrate solution (from Tanaka Kikinzoku Kogyo K.K., with palladium concentration of 100 g/L) and a dinitrodiammine platinum nitric acid solution (from Tanaka Kikinzoku Kogyo K.K., with platinum concentration of 100 g/L) were mixed at a molar ratio of palladium to platinum of 50:50 to prepare a coating liquid 1.

- Coating -

A bath containing the coating liquid 1 was placed at the bottom of the coating roll, the coating liquid 1 was impregnated into an EPDM coating roll, a roll was placed on the top so that the roll and the coating liquid 1 were always in contact with each other, and further, a PVC roller was placed thereon, and the coating liquid 1 was applied to the conductive substrate (roll method). Before the coating liquid 1 being dried, the conductive substrate was quickly passed between two EPDM sponge rolls to remove by suction the coating liquid accumulating at intersections of the mesh of the conductive substrate.

- Precursor layer forming -

The conductive substrate subjected to the coating was dried at 50 °C for 10 minutes to form a precursor layer.

- Sintering -

The conductive substrate on which the precursor layer was formed was heated and sintered at 500 °C for 10 minutes using a muffle furnace to thermally decompose the precursor layer.

This cycle of coating, precursor layer forming, and sintering was repeated 18 times. Further, post-sintering was performed in an air atmosphere at 500 °C for 1 hour to prepare a cathode (1) having a thickness of 0.16 mm.

The cathode was weighed with an electronic balance, and the difference from the weight of the conductive substrate before the forming of the catalyst layer was divided by the area of 8.5 cm $\times$ 17.0 cm to calculate the weight of the catalyst layer per unit area.

The ratio between Pd and PdO in this catalyst layer was determined by XRD measurement to be described later.

The weight of Pt and Pd contained in the catalyst layer was calculated assuming that the weight of the catalyst layer was the total weight of Pt, Pd, and PdO contained in the catalyst layer.

(Example 2)

A cathode (2) was prepared in the same manner as in Example 1 except that the cycle of coating, precursor layer forming, and sintering was repeated three times using the coating liquid 1, and the weight of the catalyst, Pt, and Pd was calculated.

(Example 3)

A cathode (3) was prepared in the same manner as in Example 1 except that the cycle of coating, precursor layer forming, and sintering was repeated five times using the coating liquid 1, and the weight of the catalyst, Pt, and Pd was calculated.

(Example 4)

A palladium nitrate solution (from Tanaka Kikinzoku Kogyo K.K., with palladium concentration of 100 g/L) and a dinitrodiammine platinum nitric acid solution (from Tanaka Kikinzoku Kogyo K.K., with platinum concentration of 100 g/L) were mixed at a molar ratio of palladium to platinum of 25:75 to prepare a coating liquid 2.
A cathode was prepared in the same manner as in Example 1 except that the cycle of coating, precursor layer forming, and sintering was repeated four times using the coating liquid 2, and the weight of the catalyst, Pt, and Pd was calculated.

(Example 5)

A cathode (5) was prepared in the same manner as in Example 1 except that the cycle of coating, precursor layer forming, and sintering was repeated 20 times using a dinitrodiammine platinum nitric acid solution (from Tanaka Kikinzoku Kogyo K.K., with platinum concentration of 100 g/L) as the coating liquid 3, and the weight of the catalyst and Pt was calculated.

(Example 6)

A cathode (6) was prepared in the same manner as in Example 1 except that the cycle of coating, precursor layer forming, and sintering was repeated six times using the coating liquid 3, and the weight of the catalyst, and Pt was calculated.

(Comparative Example 1)

A cathode (comparison 1) was prepared in the same manner as in Example 1 except that the cycle of coating, precursor layer forming, and sintering was repeated twice using the coating liquid 1, and the weight of the catalyst, Pt, and Pd was calculated.

(Comparative Example 2)

A cathode (comparison 2) was prepared in the same manner as in Example 1 except that the cycle of coating, precursor layer forming, and sintering was repeated twice using the coating liquid 2, and the weight of the catalyst, Pt, and Pd was calculated.

(Comparative Example 3)

A palladium nitrate solution (from Tanaka Kikinzoku Kogyo K.K., with palladium concentration of 100 g/L) and a dinitrodiammine platinum nitric acid solution (from Tanaka Kikinzoku Kogyo K.K., with platinum concentration of 100 g/L) were mixed at a molar ratio of palladium to platinum of 75:25 to prepare a coating liquid 4.
A cathode (comparison 3) was prepared in the same manner as in Example 1 except that the cycle of coating, precursor layer forming, and sintering was repeated three times using the coating liquid 4, and the weight of the catalyst, Pt, and Pd was calculated.

(Comparative Example 4)

A cathode (comparison 4) was prepared in the same manner as in Example 1 except that the cycle of coating, precursor layer forming, and sintering was repeated three times using the coating liquid 3, and the weight of the catalyst and Pt was calculated.

(Comparative Example 5)

A cathode (comparison 5) was prepared in the same manner as in Example 1 except that the cycle of coating, precursor layer forming, and sintering was repeated 25 times using the coating liquid 1, and the weight of the catalyst, Pt, and Pd was calculated.

[Evaluation]

(Average thickness of catalyst layer)

After embedding the electrode with epoxy resin, a cross section was prepared by broad ion beam (BIB) processing with Ar ion beam. The BIB processed cross section was observed with SEM (S-4800 from Hitachi High-Technologies Corporation) to obtain a backscattered electron image (at ×3000 magnification).
Based on this reflected electron image, the average thickness of the catalyst layer was calculated by image analysis software ImageJ using the following method. After filtering with a median filter under the condition of radius: 3.0 pixels, a binary image by the MaxEntropy method was prepared, and the area of the catalyst layer in the cross section perpendicular to the lamination direction of the catalyst layer was determined by image analysis. Separately, the following operations are performed: binarization by the Otus method, hole filling processing inside the catalyst layer, edge extraction, and calculation of the length of the interfacial line segment in the cross section between the embedding resin and the catalyst layer. Then, the thickness of the catalyst layer was calculated from the following definition formula:

$$\text{catalyst layer thickness } (\mu m) = \text{catalyst layer area } (\mu m^2) \text{ / interfacial line segment length } (\mu m)$$

For each electrode, the thickness of the catalyst layer was calculated by the above method at three locations, and an average value of the measurements was calculated and used as the average thickness of the catalyst layer.

(Ratio of platinum atoms to metal atoms contained in the catalyst layer)

Naphthalene coating was applied to each electrode, a tungsten protective film was formed thereon, and a cross section was prepared by focused ion beam processing (FIB processing) with gallium ions. Observation was made of the FIB processed cross section with STEM-EDX (HD-2300A from Hitachi High-Technologies Corporation), an analysis was made to investigate elements in the catalyst layer, and a calculation was made to determine the content proportions of metal atoms including platinum atoms contained in the catalyst layer.
For each electrode, a calculation was made to determine the content proportions of metal atoms including platinum atoms at three locations in the catalyst layer. Then, an average value of the respective ratios of platinum atoms to all metal atoms was calculated, and used as the ratio of platinum atoms to metal atoms contained in the catalyst layer.

(Oxidation state of Pd)

An X-ray diffraction spectrum of the cathode was obtained using an X-ray diffractometer, "RINT 2000 diffractometer" from Rigaku Corporation. From this spectrum, a further calculation was made to determine the peak intensity of the metal Pd and the peak intensity of the oxidized Pd were calculated, and the ratio PdO/(Pd+PdO) of the peak intensity was taken as the oxidation degree of Pd in the catalyst layer. The excitation voltage was 40 kV, the excitation current was 200 mA, and the operation axis was measured as $2\theta/\theta$.

(Cathode overvoltage)

The cathode was cut into 2 cm × 2 cm and fixed to a nickel rod coated with PTFE with a nickel screw. A platinum mesh was used as a counter electrode and electrolysis was carried out at 80 °C in a 32 wt% sodium hydroxide aqueous solution at a current density of 0.6 A/cm$^2$, and the hydrogen overvoltage was measured. The measurement of the hydrogen overvoltage was performed with a three electrode method using a Luggin tube in order to eliminate the influence of ohmic loss due to liquid resistance. The distance between the tip of the Luggin tube and the cathode was fixed at 1 mm. As an apparatus for measuring hydrogen overvoltage, Potentiostat/Galvanostat "1470E system" from Solartron Analytical was used. Silver-silver chloride (Ag/AgCl) was used as the reference electrode for the three electrode method. The ohmic loss that could not be removed even by using the three electrode method was measured by the AC impedance method and the hydrogen overvoltage was corrected based on the measurements of ohmic loss. For measurement of ohmic loss, a frequency characteristic analyzer "1255 B" from Solartron Analytical was used.

(Reverse Energization Test 1)

Using the three electrode method, cyclic voltammetry measurement was carried out with a sweep width of from -1.25 V vs. Ag/AgCl to +0.2 V vs. Ag/AgCl. The potential sweep rate was 500 mV/sec. Starting from -1.25 V, passing through +0.2 V, and reaching -1.25 V again was defined as a single cycle corresponding to reverse energization. First, overvoltage was measured prior to a reverse energization test, and after ten cycles overvoltage was measured again. After 90 additional cycles, overvoltage was measured, and the measurement was used as the overvoltage after a total of 100 cycles. Similarly, measurements were made to determine the overvoltage after a total of 100, 500, 1000, 1500, 2000, and 2500 cycles, respectively.

These results are plotted as the number of total cycles on the horizontal axis and overvoltage on the vertical axis, several plots from the start of the rise of the overvoltage until the rise stops were approximated, and the total number of cycles in which the overvoltage reached 150 mV on the approximate line was calculated and used as an indicator of reverse energization resistance. In addition, the overvoltage after 2500 cycles in total was used as an indicator of reverse electricity resistance.

Evaluation results in Examples and Comparative Examples are listed in Table 1.

Table 1-1

| | | | Example 1 | Example 2 | Example 3 | Example 4 | Example 5 | Example 6 |
|---|---|---|---|---|---|---|---|---|
| Weight per unit area | Pt | g/m$^2$ | 20.0 | 4.0 | 6.1 | 6.6 | 20.2 | 6.4 |
| | Pd | g/m$^2$ | 14.0 | 2.2 | 3.4 | 1.2 | 0.0 | 0.0 |
| | Catalyst layer | g/m$^2$ | 36.1 | 6.4 | 10.0 | 8.0 | 20.2 | 6.4 |
| Average thickness of catalyst layer | | $\mu$m | 2.46 | 0.38 | 0.65 | 0.40 | 0.83 | 0.40 |
| Ratio of platinum atoms to metal atoms in catalyst layer | | mol% | 45 | 46 | 47 | 68 | 95 | 91 |
| Oxide ratio | PdO / (Pd + PdO) | mol% | 100 | 100 | 100 | 100 | n/a | n/a |
| Overvoltage in cathode | Initial overvoltage | mV | 126 | 128 | 125 | 118 | 122 | 119 |
| Reverse energization test 1 | Number of reverse energization cycles exceeding 150mV | times | not exceed | 554 | 1852 | 1616 | not exceed | 1506 |
| | Overvoltage after 2500 reverse energization cycles | mV | 120 | 274 | 167 | 215 | 133 | 243 |
| n/a: not measured | | | | | | | | |

Table 1-2.

|  |  |  | Comp. Ex. 1 | Comp. Ex. 2 | Comp. Ex. 3 | Comp. Ex. 4 | Comp. Ex. 5 |
|---|---|---|---|---|---|---|---|
| Weight per unit area | Pt | $g/m^2$ | 2.5 | 3.3 | 1.8 | 4.1 | 30.6 |
|  | Pd | $g/m^2$ | 1.3 | 0.6 | 3.0 | 0.0 | 20.4 |
|  | Catalyst layer | $g/m^2$ | 4.0 | 4.0 | 5.3 | 4.1 | 54.1 |
| Average thickness of catalyst layer |  | $\mu$m | 0.26 | 0.20 | 0.42 | 0.17 | 3.64 |
| Ratio of platinum atoms to metal atoms in catalyst layer |  | mol% | 47 | 72 | 23 | 95 | 41 |
| Oxide ratio | PdO / (Pd + PdO) | mol% | 100 | 100 | 100 | n/a | 100 |
| Overvoltage in cathode | Initial overvoltage | mV | 118 | 114 | 124 | 121 | 163 |
| Reverse energization test 1 | Number of reverse energization cycles exceeding 150mV | times | 106 | 478 | 4 | 98 | 0 |
|  | Overvoltage after 2500 reverse energization cycles | mV | 324 | 321 | 346 | 360 | 284 |
| Comp. Ex.: Comparative Example<br>n/a: not measured |  |  |  |  |  |  |  |

As can be seen from Table 1, in the cathodes of our examples, the total number of cycles of 1,500 or more was required for the overvoltage exceeding 150 mV, or the overvoltage did not exceed 150 mV. This means that the overvoltage was kept low for a longer period even when reverse energization was applied. In contrast, in the comparative examples, the overvoltage exceeded 150 mV at several hundred cycles and at most 500 cycles.

In addition, in the cathodes of our examples, the overvoltage was 280 mV or less even after 2,500 cycles in total, yet in the comparative examples, it was over 280 mV. An overvoltage of 280 mV or more has the same overpotential as that of a nickel mesh which is a conductive substrate.

The cathode of Example 1 yielded the best results for Reverse Electricity Test 1 and was lowest in the overvoltage after 2,500 cycles.

(Example 7)

An electrolytic cell for alkaline water electrolysis and a bipolar electrolyzer were prepared as follows.

- Cathode -

Using a plain weave mesh substrate obtained by knitting fine wires of nickel having a diameter of 0.15 mm with an aperture size of 0.485 mm (a mesh count of 40) as a conductive substrate, a cathode was prepared in the same manner as in Example 1, cut out in accordance with the cell area, and used as a zero-gap bipolar element of Example 7.

- Partition wall and outer frame -

As a bipolar element, one having a partition wall partitioning the anode and the cathode and an outer frame surrounding the partition wall was used. Those members in contact with the electrolyte, such as the partition wall and the frame of the bipolar element, were all made of nickel.

- Anode -

As the anode, a nickel-expanded metal substrate that had been subjected to blasting in advance was used, and granulated products of nickel oxide were sprayed onto both surfaces of a conductive substrate by a plasma spraying method to produce the anode.

- Conductive elastic body -

As the conductive elastic body, a woven metal fabric of nickel wires having a wire diameter of 0.15 mm was corrugated so as to have a corrugation height of 5 mm. The thickness was 5 mm, the repulsive force at 50 % compressive deformation was 150 g/cm², and the aperture size was about 4.93 mm (mesh opening about 5 mesh).

**[0188]** - Membrane - Zirconium oxide (trade name "EP Zirconium Oxide", from Daiichi Kigenso Kagaku Kogyo Co., Ltd.) and N-methyl-2-pyrrolidone (from Wako Pure Chemical Industries, Ltd.) were put into a ball mill pot containing SUS balls with a particle size of 0.5 mm. These were stirred together at a rotation speed of 70 rpm for 3 hours and dispersed to obtain a mixture. The resulting mixture was filtered through a stainless steel mesh (aperture size: 0.595 mm (mesh count: 30 mesh)) to separate the balls from the mixture. Polysulfone (Udel® from Solvay

Advanced Polymers, Udel is a registered trademark in Japan, other countries, or both) and polyvinylpyrrolidone (from Wako Pure Chemical Industries, Ltd., weight-average molecular weight (Mw): 900,000) were added to the mixture from which the balls had been separated, and stirred with a three-one motor for 12 hours and dissolved to obtain a coating liquid having the following composition:

| | |
|---|---|
| polysulfone: | 15 parts by mass |
| polyvinylpyrrolidone: | 6 parts by mass |
| N-methyl-2-pyrrolidone: | 70 parts by mass |
| zirconium oxide: | 45 parts by mass |

The coating liquid was applied to both surfaces of a polyphenylene sulfide mesh (from Clever Co., Ltd., film thickness: 280 $\mu$m, mesh opening: 358 $\mu$m, and fiber diameter: 150 $\mu$m) as a substrate using a comma coater to obtain a coating thickness of 150 $\mu$m per surface. Immediately after the coating, the substrate coated with the coating liquid was exposed to vapor from the coagulation bath stored with a pure water/isopropanol mixed solution at 30 °C (a solution of pure water/isopropanol = 50/50 (v/v) from Wako Pure Chemical Industries, Ltd.). Immediately thereafter, the substrate coated with the coating liquid was immersed in the coagulation bath. Then, by coagulating polysulfone, a coating film was formed on the surface of the substrate. Thereafter, the coating film was thoroughly rinsed with pure water to obtain a porous membrane.

The average pore diameter of this porous membrane was 0.3 $\mu$m in terms of average pore diameter for water permeation at 90 °C. The thickness was 580 $\mu$m. The porosity was 43 %. The mode diameter of $ZrO_2$ was 5.0 $\mu$m. The ratio of the mode diameter of inorganic particles to the average pore size of the porous membrane (mode diameter/average pore diameter) was 2.6.

- Gasket -

The gasket used had a quadrangular shape with a thickness of 4.0 mm, a width of 18 mm, and an inner size of 504 mm square, contained an opening having the same size as the electrode compartment in plan view, and had a slit structure for holding by inserting the membrane therethrough. In the slit structure, a gap of 0.4 mm was provided at the center portion in the thickness direction of the inner wall of the opening to hold the partition wall by inserting the partition wall therethrough. This gasket was made of EPDM rubber and had a tensile stress of 4.0 MPa at 100 % deformation.

- Zero-gap type bipolar element -

The zero-gap cell unit 60 of external header type has a rectangular shape of 540 mm × 620 mm, and the area of the current-carrying surface of the anode 2a and the cathode 2c is 500 mm × 500 mm. On the cathode side, the zero-gap bipolar element 60 comprises: a cathode 2c, a conductive elastic body 2e, and a cathode current collector 2r that are stacked on top of one another and connected to a partition wall 1 via a cathode rib 6; and a cathode compartment 5c in which the electrolyte flows. On the anode side, the zero-gap bipolar element 60 comprises: an anode 2a that is connected to a partition wall 1 via an anode rib 6; and an anode compartment 5a in which the electrolyte flows (FIG. 2).

The depth of the anode compartment 5a (the anode compartment depth, in FIG. 2, the distance between the partition wall and the anode) was 25 mm, the depth of the cathode compartment 5c (the cathode compartment depth, in FIG. 2, the distance between the partition wall and the cathode current collector) was 25 mm, and the material was nickel. The partition wall 1 was made of nickel and obtained by welding the anode rib 6 made of nickel having a height of 25 mm and a thickness of 1.5 mm and the cathode rib 6 made of nickel having a height of 25 mm and a thickness of 1.5 mm. The thickness of the partition wall 1 was 2 mm.

As the cathode current collector 2r, a nickel-expanded metal substrate subjected to blasting in advance was used. The thickness of the substrate was 1 mm and the aperture ratio was 54 %. The conductive elastic body 2e was fixed by spot-welding on the cathode current collector 2r. By stacking these zero-gap bipolar elements on top of one another via the gasket holding the membrane, it is possible to form a zero-gap structure Z in which the anode 2a and the cathode 2c are pressed against the membrane 4.

(Comparative Example 6)

A zero-gap bipolar element was produced in the same manner as in Example 7 except that the cathode prepared in the same manner as in Comparative Example 1 was used.

(Reverse Energization Test 2)

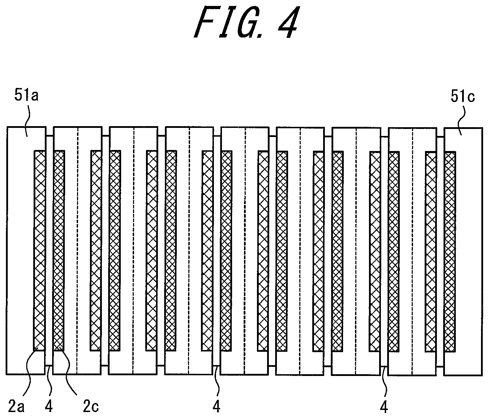

A bipolar electrolyzer was prepared with elements stacked in the order illustrated in FIG. 4.

The following were stacked in the stated order: an anode terminal cell unit 51a using an anode as described above; a membrane as described above; portions at which three sets of zero-gap bipolar elements according to Example 7 were stacked on top of one another with membranes sandwiched therebetween; a membrane as described above; portions at which three sets of zero-gap bipolar elements according to Comparative Example 6 were stacked on top of one another with membranes sandwiched therebetween; a membrane as described above; and a cathode terminal cell 51c using a cathode according to Example 7.

An electrolysis device was prepared using the bipolar electrolyzer illustrated in FIG. 4 including: four electrolytic cells (zero-gap structure), each containing a membrane as described above in contact with both an anode as described above and a cathode according to Example 7; and four electrolytic cells (zero-gap structure), each containing a membrane as described above in contact with both an anode as described above and a cathode according to Comparative Example 6.

The electrolysis device comprises a bipolar electrolyzer 50, a tubing pump 71 for circulating the electrolyte, and gas-liquid separation tanks 72 for separating the electrolyte from hydrogen and/or oxygen. A 30 % KOH aqueous solution is sealed as the electrolyte in each gas-liquid separation tank 72 and in the bipolar electrolyzer 50. The electrolyte is caused by the tubing pump 71 to circulate through the anode compartments 5a of the bipolar electrolyzer 50 and the gas-liquid separation tank 72 for anode, and through the cathode compartments 5c of the bipolar electrolyzer 50 and the gas-liquid separation tank 72 for cathode. The temperature was adjusted to 90 °C.

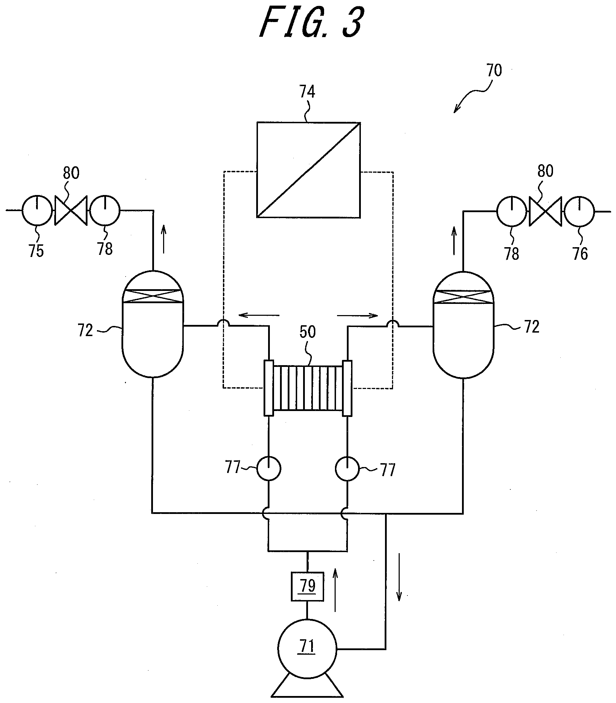

In the electrolysis device, the gas separated in each gas-liquid separation tank 72 is recovered through a pressure gauge 78, a pressure control valve 80, an oxygen concentration meter 75, or a hydrogen concentration meter 76. In addition, electric power can be controlled by a rectifier 74. In addition, flow meters 77 and a heat exchanger 79 are provided in the passage of the circulating electrolyte. Arrows in FIG. 3 indicate directions in which the circulating liquid (electrolyte) and the gas flow.

In the circulation passage, a 20A SGP carbon steel plumbing system was used with Teflon® lining inner surface treatment applied to those portions in contact with the electrolyte (Teflon is a registered trademark in Japan, other countries, or both). The gas-liquid separation tank 72 used had a height of 1,400 mm and a volume of 1 $m^3$.

The gas-liquid separation tank 72 used had a height of 1,400 mm and a volume of 1 $m^3$.

The amount of liquid in each gas-liquid separation tank 72 was about 50 % of the design volume.

In the electrolyzer of external header type, external plumbing systems (each including an anode inlet header 10ai, a cathode inlet header lOci, an anode outlet header 10ao, and a cathode outlet header lOco) for flowing an electrolyte are provided at four locations in an electrolytic frame, which is the casing of a bipolar element. Each of these external plumbing systems is connected via an external hose to each electrode compartment of the electrolyzer.

These piping structures are called external header structure. The external header plumbing systems are divided into cathode-side external header plumbing systems and anode-side external header plumbing systems.

As such, in each element, the electrolyte enters the cathode compartment 5c from the cathode inlet header lOci via the external hose, and the electrolyte flows from the cathode compartment 5c to the cathode outlet header lOco via the external hose. Similarly, on the anode side, the electrolyte enters the anode compartment 5a from the anode inlet header 10ai via the external hose, and the electrolyte flows from the anode compartment 5a to the anode outlet header 10ao via the external hose. Since the input header of the external header is on the lower side of the electrolytic frame and the output header on the upper side, the electrolyte flows from the bottom to the top. Further, it rises in a substantially vertical direction with respect to the electrode surface. A thermocouple is installed in each external hose of each cell, and the temperature difference before and after passing through the element can be measured.

In this example, since the anode compartment 5a and the cathode compartment 5c each have 29 compartments, the electrolyte is caused to flow from the inlet header toward the outlet header in each of the 29 compartments.

Since electrolysis produces hydrogen gas in the cathode compartment 5c and oxygen gas in the anode compartment 5a, there are formed a mixed-phase flow of the electrolyte and the hydrogen gas in the cathode outlet header lOco and a mixed-phase flow of the electrolyte and the oxygen gas in the anode outlet header 10ao.

From the rectifier 74, the bipolar electrolyzer 50 was energized with respect to the area of the cathode and the anode under the conditions of Electrolysis Test 1 or Electrolysis Test 2 described below. The pressure in the tank after the start of energization was measured with each pressure gauge 78 and adjusted so that the cathode-side pressure was 50 kPa and the oxygen-side pressure was 49 kPa. The pressure adjustment was carried out by installing a control valve 80 downstream of each pressure gauge 78.

In the electrolysis device, the gas separated in each gas-liquid separation tank 72 is recovered through a pressure gauge 78, a pressure control valve 80, an oxygen concentration meter 75, or a hydrogen concentration meter 76. In addition, electric power can be controlled by the rectifier 74. In addition, flow meters 77 and a heat exchanger 79 are provided in the passage of the circulating electrolyte.

Note that the rectifier, the oxygen concentration meter, the hydrogen concentration meter, the pressure gauges, the tubing pump, the gas-liquid separation tanks, the water replenisher, and the like were all those commonly used in the technical field, and the electrolysis device for alkaline water electrolysis was prepared using these components.

Using the above electrolytic device, positive current was continuously applied for 11 hours so as to obtain a current density of 6 kA/m$^2$, water electrolysis was performed, and the electrolysis was stopped. After holding for 1 hour in this state, positive current was applied again for 11 hours at 6 kA/m$^2$. Energization was performed for 1,000 cycles with a cycle of positive energization and stoppage being one cycle.

Cell voltages were monitored for each cell of Example 7 and Comparative Example 6, and voltage transitions were recorded. Of these, since reverse currents are hardly generated in a cell including an anode terminal cell unit 51a and a cell including a cathode terminal cell 51c, measurement was made of the cell voltages after 1,000 cycles for the remaining six cells, the measurement results obtained by focusing on three cells in Example 7 and Comparison Example 6, respectively, were averaged, and the average values were compared in Table 2.

Table 2

| | | | Example 7 | Comp. Ex. 6 |
|---|---|---|---|---|
| Weight per unit area | Pt | g/m$^2$ | 20.0 | 2.5 |
| | Pd | g/m$^2$ | 14.0 | 1.3 |
| | Catalyst layer | g/m$^2$ | 36.1 | 4.0 |
| Oxide ratio | PdO / (Pd + PdO) | mol% | 100 | 100 |
| Reverse energization test 2 | Initial cell voltage | V | 1.78 | 1.80 |
| | Cell voltage after 1000 cycles (average) | V | 1.82 | 2.02 |

As illustrated in Table 2, in Example 7, the 3-cell average cell voltage after 1,000 cycles was determined to be 1.82 V, which was a 40 mV increase compared to the initial cell voltage, whereas in Comparative Example 6 it was 2.02 V, a 220 mV increase in cell voltage. This means that Example 7 maintained a low overvoltage for a longer period than Comparative Example 6 even when reverse energization was applied.

In this test, a larger amount of electric charge is accumulated in the anode due to a long continuous energization time per cycle (elapsed time of the electrolytic potential), causing a larger amount of reverse current to flow, as compared to those in the triode cell tests (Examples 1 to 6, Comparative Examples 1 to 5). As a result, deterioration due to reverse energization cycles in the cathode becomes more pronounced, and the rise of the overvoltage tends to be advanced. It is concluded that the rise in the cell voltage described above corresponds to a difference in the degree of deterioration due to reverse energization in each cathode, that is, the aforementioned long-term low cell voltage property is attributable to the cathode of Example 7 having higher reverse electricity resistance than Comparative Example 6.

INDUSTRIAL APPLICABILITY

According to the present invention, in a bipolar electrolytic cell for alkaline water electrolysis having a zero-gap structure, even when operated under a variable power source such as renewable energy, it is possible to maintain high energy conversion efficiency without a rise in overvoltage.

REFERENCE SIGNS LIST

1     partition wall

| | |
|---|---|
| 2 | electrode |
| 2a | anode |
| 2c | cathode |
| 2e | elastic body |
| 2r | collector |
| 3 | outer frame |
| 4 | membrane |
| 5 | electrode compartment |
| 5a | anode compartment |
| 5c | cathode compartment |
| 5i | electrolyte inlet |
| 5o | electrolyte outlet |
| 6 | rib |
| 7 | gasket |
| 10 | header |
| 10o | external header |
| 10ai | anode inlet header |
| 10ao | anode outlet header |
| 10ci | cathode inlet header |
| 10co | cathode outlet header |
| 50 | bipolar electrolyzer |
| 51g | fast head, loose head |
| 51i | insulating plate |
| 51a | anode terminal element |
| 51c | cathode terminal element |
| 51r | tie rod |
| 60 | bipolar element |
| 65 | electrolytic cell |
| 70 | electrolysis device |
| 71 | feed pump |
| 72 | gas-liquid separation tank |
| 74 | rectifier |
| 75 | oxygen concentration meter |
| 76 | hydrogen concentration meter |
| 77 | flow meter |
| 78 | pressure gauge |
| 79 | heat exchanger |
| 80 | pressure control valve |
| Z | zero-gap structure |

**Claims**

1. A cathode for alkaline water electrolysis comprising:

   a conductive substrate; and
   a catalyst layer containing at least platinum formed on a surface of the conductive substrate, wherein
   the conductive substrate is a mesh of metal wires containing at least one metal including nickel, wherein the mesh is a plain weave mesh knitted with fine wires of nickel having a wire diameter of 0.05 mm or more and 1.0 mm or less with a mesh count of 20 mesh to 60 mesh, wherein the mesh count refers to the number of threads per inch contained in the mesh, and an inch is equal to 25.4mm,
   each of the metal wires containing at least one metal including nickel has a circular or elliptical shape in a cross section perpendicular to its axial direction,
   the catalyst layer has a weight per unit area, determined as described in the description, of 6.0 $g/m^2$ or more and 40.0 $g/m^2$ or less, and
   the platinum has a weight per unit area, determined as described in the description, of 5.5 $g/m^2$ or more and 25.0 $g/m^2$ or less.

**2.** A cathode according to claim 1, wherein

the catalyst layer has an average thickness, determined as described in the description, of 0.30 $\mu$m or more and 3.5 $\mu$m or less, and
the ratio of platinum atoms to metal atoms contained in the catalyst layer, determined as described in the description, is 25 mol% or more and 100 mol% or less.

**3.** The cathode according to any one of claim 1 or 2, wherein the catalyst layer further contains palladium.

**4.** The cathode according to claim 3, wherein the catalyst layer has a weight per unit area of 8.0 g/m$^2$ or more and 40.0 g/m$^2$ or less,

the platinum has a weight per unit area of 6.0 g/m$^2$ or more and 25.0 g/m$^2$ or less, and
the palladium has a weight per unit area of 2.0 g/m$^2$ or more and 15.0 g/m$^2$ or less.

**5.** A method for producing the cathode as recited in any one of claims 1 to 4, comprising:

applying a coating liquid containing at least a platinum compound to a mesh of metal wires containing at least one metal including nickel;
forming a precursor layer containing platinum by drying the coating liquid;
performing sintering such that a catalyst layer is formed by heating the precursor layer in a temperature range of 400 °C to 800 °C; and
repeating the above procedure at least once in the stated order.

**6.** An electrolyzer comprising:

the cathode as recited in any one of claims 1 to 4;
an anode using an expanded metal as a substrate; and
an ion-permeable membrane configured to separate a cathode compartment from an anode compartment, wherein
a plurality of elements including the cathode and the anode are overlapped one another with the ion-permeable membrane interposed therebetween, and
the ion-permeable membrane is in contact with the cathode and the anode to form a zero-gap structure.

**Patentansprüche**

**1.** Kathode für alkalische Wasserelektrolyse, umfassend:

ein leitfähiges Substrat; und
eine Katalysatorschicht, die wenigstens Platin enthält und auf der Oberfläche des leitfähigen Substrats ausgebildet ist, wobei
das leitfähige Substrat ein Netz von Metalldrähten ist, die wenigstens ein Nickel umfassendes Metall enthalten, wobei das Netz ein Gewebe in Leinenbindung ist, das mit feinen Nickeldrähten mit einem Drahtdurchmesser von 0,05 mm oder mehr und 1,0 mm oder weniger mit einer Maschenzahl von 20 mesh bis 60 mesh gewirkt ist, wobei sich die Maschenzahl auf die Anzahl der Fäden pro Zoll bezieht, die in der Masche enthalten sind, und ein Zoll gleich 25,4 mm ist,
jeder der Metalldrähte, die wenigstens ein Nickel umfassendes Metall enthalten, im Querschnitt senkrecht zur axialen Richtung eine kreisförmige oder elliptische Form aufweist;
die Katalysatorschicht wenigstens Platin enthält und ein Flächengewicht, das so bestimmt wird, wie es in der Beschreibung beschrieben ist, von 6,0 g/m$^2$ oder mehr und 40,0 g/m$^2$ oder weniger aufweist; und
das Platin ein Flächengewicht, das so bestimmt wird, wie es in der Beschreibung beschrieben ist, von 5,5 g/m$^2$ oder mehr und 25,0 g/m$^2$ oder weniger aufweist.

**2.** Kathode gemäß Anspruch 1, wobei

die Katalysatorschicht eine mittlere Dicke, die so bestimmt wird, wie es in der Beschreibung beschrieben ist, von 0,30 $\mu$m oder mehr und 3,5 $\mu$m oder weniger beträgt; und

das Verhältnis von Platinatomen zu Metallatomen, die in der Katalysatorschicht vorhanden sind, welches so bestimmt wird, wie es in der Beschreibung beschrieben ist, 25 Mol-% oder mehr und 100 Mol-% oder weniger beträgt.

3. Kathode gemäß einem der Ansprüche 1 oder 2, wobei die Katalysatorschicht weiterhin Palladium enthält.

4. Kathode gemäß Anspruch 3, wobei die Katalysatorschicht ein Flächengewicht von 8,0 g/m$^2$ oder mehr und 40,0 g/m$^2$ oder weniger aufweist;

das Platin ein Flächengewicht von 6,0 g/m$^2$ oder mehr und 25,0 g/m$^2$ oder weniger aufweist; und
das Palladium ein Flächengewicht von 2,0 g/m$^2$ oder mehr und 15,0 g/m$^2$ oder weniger aufweist.

5. Verfahren zur Herstellung der Kathode gemäß einem der Ansprüche 1 bis 4, umfassend:

Auftragen einer Beschichtungsflüssigkeit, die wenigstens eine Platinverbindung enthält, auf ein Netz von Metalldrähten, die wenigstens ein Nickel umfassendes Metall enthalten;
Bilden einer Platin enthaltenden Vorläuferschicht durch Trocknen der Beschichtungsflüssigkeit;
Durchführen einer Sinterung, so dass eine Katalysatorschicht entsteht, durch Erhitzen der Vorläuferschicht in einem Temperaturbereich von 400 °C bis 800 °C; und
wenigstens einmaliges Wiederholen des obigen Verfahrens in der angegebenen Reihenfolge.

6. Elektrolyseur, umfassend:

die Kathode gemäß einem der Ansprüche 1 bis 4;
eine Anode, bei der ein Streckmetall als Substrat verwendet wird; und
eine ionendurchlässige Membran, die so konfiguriert ist, dass sie eine Kathodenkammer von einer Anodenkammer trennt, wobei
eine Vielzahl von Elementen einschließlich der Kathode und der Anode einander überlappen, wobei sich die ionendurchlässige Membran dazwischen befindet; und
sich die ionendurchlässige Membran mit der Kathode und der Anode in Kontakt befindet, wobei eine lückenlose Struktur entsteht.

## Revendications

1. Cathode pour électrolyse d'eau alcaline comprenant :

un substrat conducteur ; et
une couche de catalyseur contenant au moins du platine formée sur une surface du substrat conducteur, dans laquelle
le substrat conducteur est un treillis de fils métalliques contenant au moins un métal comprenant du nickel, dans laquelle le treillis est un treillis à armure unie tricoté avec des fils de nickel fins ayant un diamètre de fil de 0,05 mm ou plus et de 1,0 mm ou moins avec un nombre de mailles de 20 mesh à 60 mesh, dans laquelle le nombre de mailles fait référence au nombre de fils par pouce contenus dans le treillis, et un pouce est égal à 25,4 mm,
chacun des fils métalliques contenant au moins un métal comprenant du nickel a une forme circulaire ou elliptique dans une section transversale perpendiculaire à sa direction axiale,
la couche de catalyseur a un poids par unité de surface, déterminé comme décrit dans la description, de 6,0 g/m$^2$ ou plus et de 40,0 g/m$^2$ ou moins, et
le platine a un poids par unité de surface, déterminé comme décrit dans la description, de 5,5 g/m$^2$ ou plus et de 25,0 g/m$^2$ ou moins.

2. Cathode selon la revendication 1, dans laquelle

la couche de catalyseur a une épaisseur moyenne, déterminée comme décrit dans la description, de 0,30 $\mu$m ou plus et de 3,5 $\mu$m ou moins, et
le rapport d'atomes de platine à atomes de métal contenus dans la couche de catalyseur, déterminé comme décrit dans la description, est de 25 % en mol ou plus et de 100 % en mol ou moins.

**3.** Cathode selon l'une quelconque de la revendication 1 ou 2, dans laquelle la couche de catalyseur contient de plus du palladium.

**4.** Cathode selon la revendication 3, dans laquelle la couche de catalyseur a un poids par unité de surface de 8,0 g/m$^2$ ou plus et de 40,0 g/m$^2$ ou moins,

le platine a une poids par unité de surface de 6,0 g/m$^2$ ou plus et de 25,0 g/m$^2$ ou moins, et
le palladium a un poids par unité de surface de 2,0 g/m$^2$ ou plus et de 15,0 g/m$^2$ ou moins.

**5.** Procédé pour la production de la cathode selon l'une quelconque des revendications 1 à 4, comprenant :

l'application d'un liquide de revêtement contenant au moins un composé de platine à un treillis de fils métalliques contenant au moins un métal comprenant du nickel ;
la formation d'une couche de précurseur contenant du platine par séchage du liquide de revêtement ;
la réalisation d'un frittage de sorte qu'une couche de catalyseur est formée en chauffant la couche de précurseur dans un intervalle de température de 400°C à 800°C ; et
la répétition de la procédure ci-dessus au moins une fois dans l'ordre cité.

**6.** Electrolyseur comprenant :

la cathode selon l'une quelconque des revendications 1 à 4 ;
une anode utilisant un métal expansé comme un substrat ; et
une membrane perméable aux ions configurée pour séparer un compartiment de cathode d'un compartiment d'anode, dans lequel
plusieurs éléments incluant la cathode et l'anode se chevauchent l'un l'autre avec la membrane perméable aux ions intercalée entre ceux-ci, et
la membrane perméable aux ions est en contact avec la cathode et l'anode pour former une structure à zéro écartement.

## FIG. 1

*FIG. 2*

# FIG. 3

# *FIG. 4*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5553605 B
- WO 2015098058 A
- US 2012279853 A

- JP H0633481 B
- US 2015203976 A

**Non-patent literature cited in the description**

- Hydrogen Production From Water Electrolysis: Current Status and Future Trends. **ALFREDO URSUA et al.** PROCEEDINGS OF THE IEEE. IEEE, 20 January 2012, vol. 100, 410-426